# NEW EUROPEAN PATENT SPECIFICATION

(11) **EP 2 453 150 B2**
(45) Date of publication and mention of the opposition decision: **26.06.2019**
(45) Mention of the grant of the patent: 11.05.2016
(21) Application number: 11188117.3
(22) Date of filing: 07.11.2011
(51) Int. Cl.: F16J 9/14, F16J 15/32, F16J 15/44, F01D 11/00, F16J 15/16

(54) **Method of creating a seal**
Verfahren zum Erstellen einer Dichtung
Procédé de création d'une d'étanchéité

(30) Priority: 10.11.2010 US 943400
(43) Date of publication of application: 16.05.2012
(73) Proprietor: United Technologies Corporation, Farmington, CT 06032 (US)
(72) Inventor: Benjamin, Daniel, Simsbury, CT Connecticut 06070 (US); Jang, David S., Sammamish, WA Washington 98074 (US)
(74) Representative: Dehns

(56) References cited:
- EP-A1- 0 559 312
- EP-A1- 1 536 167
- EP-A1- 1 541 908
- WO-A1-96/21116
- DE-A1-102006 009 022
- DE-C1- 3 420 404
- GB-A- 2 264 541
- GB-A- 2 453 231
- JP-A- 10 183 327
- JP-A- H10 183 327
- JP-A- H11 325 259
- US-A- 5 253 878

## Description

### BACKGROUND

The present invention relates to seal assemblies, and more particularly to rotatable split ring seal assemblies.

Seal rings (or piston rings) are used in a variety of applications, such as within gas turbine engines, to create a fluidic seal between fluids at different pressures and temperatures. Static, non-rotating seal rings are typically seated by a prevailing (i.e., highest) pressure to create a face seal. However, rotating seal rings are subject to centrifugal loading, and as such typically experience more complex operational conditions than static, non-rotating seals. The complex operational loading faced by rotating seals can affect sealing efficacy.

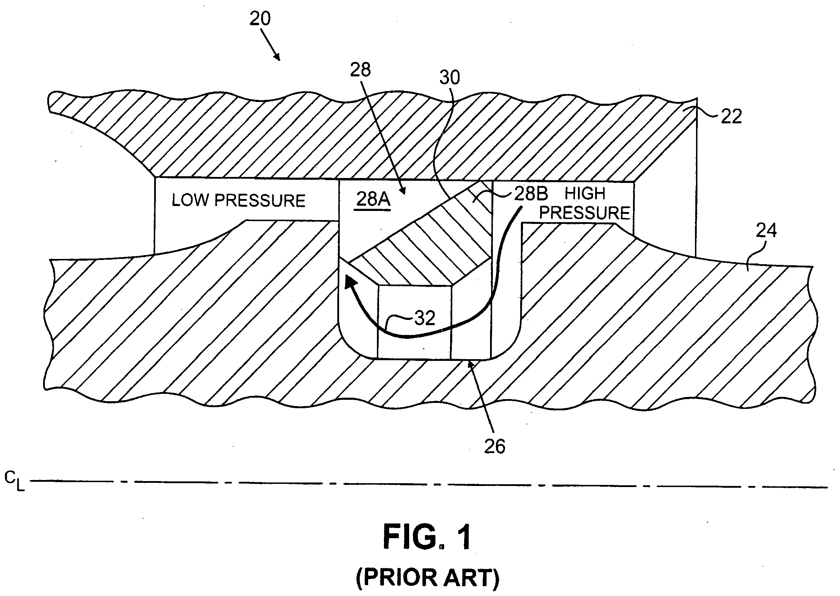

FIG. 1 is a cross-sectional view of a prior art seal assembly 20 of a gas turbine engine, shown in a rotating operational state. The seal assembly 20 includes a compressor rotor 22, a tie shaft 24, a groove 26 in the tie shaft 24, and a split seal ring (or piston ring) 28 positioned in the groove 26. The components are arranged relative to an axis of rotation C_{L} (the distance from the axis C_{L} to the illustrated components is not shown to scale). The split seal ring 28 has a first free end 28A and a second free end 28B that contact each other at a split plane 30. Having a split configuration allows a diameter of the split seal ring 28 to vary, which, among other things, allows the split seal ring 28 to be fit over the tie shaft 24 and engaged in the groove 26. During operation, the positioning of the split seal ring 28 relative to the compressor rotor 22 and the tie shaft 24 changes. At rest (not shown in FIG. 1), a spring force of the split seal ring 28 decreases its diameter. During rotation (shown in FIG. 1), centrifugal force increases the diameter of the split seal ring 28, with the first and second free ends 28A and 28B moving relative to one another in a circumferential direction along the split plane 30. During operation in a gas turbine engine, rotor 22 is subject to radial growth due to centrifugal forces and thermally-induced growth, and flexibility of the split seal ring 28 allows it to follow the rotor growth and maintain a tight fit required for sealing. Furthermore, during operation, the compressor rotor 22 tends to axially move relative to the tie shaft 24, due to engine conditions such as throttling up and down that changes compressor speed and temperature profile. The split seal ring 28 tends to axially move with the compressor rotor 22 due to friction, which in turn moves the split seal ring 28 within the groove 26. As shown in FIG. 1, the split plane 30 is oriented such that a leak path 32 is formed around the second free end 28B of the split ring seal 28. The leak path 32 is formed because the orientation of the split plane 30 does not allow the second free end 28B to contact any surface of the groove 26 when the compressor rotor 22 and the split seal ring 28 axially move to the left relative to the tie shaft 24, as shown in FIG. 1. GB 2264541 describes an improved sealing ring for gas turbine engines. GB 2453231 describes sealing rings.

The present invention provides an alternative seal ring with improved sealing effectiveness over the seal ring 28.

### SUMMARY

The invention provides a method as claimed in claim 1. The method may include when the split ring seal is spaced from the second component during rotation, forming a labyrinth seal between the split ring seal and the second component to restrict fluid flow therebetween. The method may also include producing relative axial movement between the first and second components, and/or axially moving the split seal ring relative to the second component.

### BRIEF DESCRIPTION OF THE DRAWINGS

FIG. 1 is a cross-sectional view of a prior art seal assembly.
FIG. 2 is a partial perspective view of a split seal ring according to the present invention, shown in isolation.
FIG. 3A is a cross-sectional view of a seal assembly according to the present invention during rotation, with the illustrated view oriented with respect to the split seal ring along line A-A of FIG. 2.
FIG. 3B is a cross-sectional view of a seal assembly according to the present invention during rotation, with the illustrated view oriented with respect to the split seal ring along line B-B of FIG. 2.
FIG. 3C is a cross-sectional view of a seal assembly according to the present invention during rotation, with the illustrated view oriented with respect to the split seal ring along line C-C of FIG. 2.

### DETAILED DESCRIPTION

In general, the present invention provides a rotating piston ring (or rotating seal ring) that is split to define a pair of free ends that contact one another at a split surface, which can be configured as a portion of a conical surface. In one embodiment, the seal ring can be used to provide a fluidic seal between two components, with the seal ring at least partially engaged in a groove formed in one of the components. The seal ring is split to allow for assembly in the groove and for expansion during use to follow component growth to help maintain diametrical sealing contact. Diameter of the seal ring can vary due to centrifugal forces acting on the seal ring during rotation, with the free ends (or arms) moving relative to one another in a circumferential direction along the split surface as the diameter of the seal ring changes. As the seal ring rotates with the two components, the ring tends to expand and the diameter correspondingly enlarges. The split surface is arranged such that an open leak path (i.e., gap) between the two components is substantially eliminated (i.e., sealed by the seal ring) whenever the seal ring-including any coatings thereon-abuts both of the components (including a surface of the groove). In one embodiment, the split surface is arranged radially outward from chamfered surfaces positioned at an inner diameter of the seal ring. In addition, a coating of a relative soft material, such as a copper-aluminum material, can be provided between the seal ring and one of the components. The present invention is suitable for use in gas turbine engines, such as to provide a seal between a compressor rotor and a tie shaft to help isolate fluids at different temperatures and/or pressures. In view of the description that follows, it will be understood that the present invention has numerous other applications.

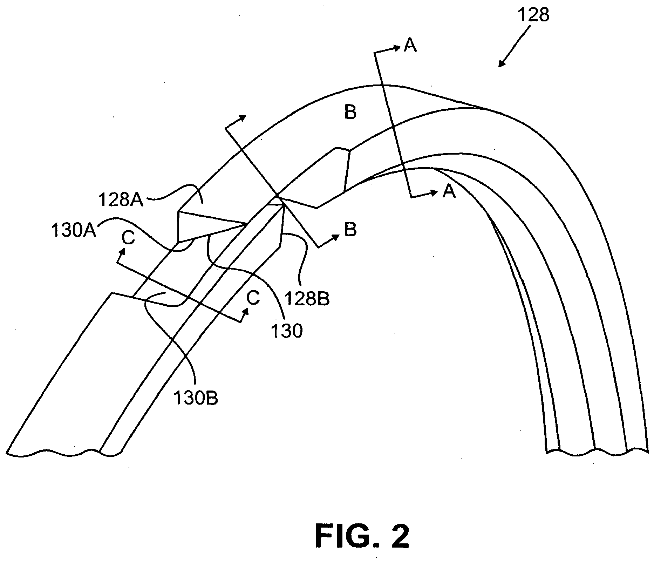

FIG. 2 is a partial perspective view of one embodiment of a seal ring (or piston ring) 128, shown in isolation. The seal ring 128 is split to define a first free end (or arm) 128A and a second free end (or arm) 128B that can contact overlap one another, and which can move relative one another in a circumferential direction along a split surface 130 located at an interface between mating cut-out notch surfaces 130A and 130B of the first and second free ends 128A and 128B, respectively. In the illustrated embodiment, the split surface 130 is generally configured as a portion of a conical surface (i.e., the split surface 130 is linear in cross-sectional profile and follows the curvature of the seal ring 128). The free ends 128A and 128B define mating cut-out notches at the split surface 130 such that the first free end 128A can occupy the cut-out notch of the second free end 128B and second free end 128B can occupy the cut-out notch of the first free end 128A, with the overlapping free ends 128A and 128B together assuming the cross-sectional profile of a main body portion of the seal ring 128 away from the cut-out notches of the free ends 128A and 128B. The seal ring 128 can be made of a metallic material, preferably a high-temperature material such as a nickel-based superalloy like Inconel® 718. Diameter of the seal ring 128 is variable, with the first and second free ends 128A and 128B moving relative to each other in the circumferential direction along the split surface 130 as the diameter changes. As explained further below, at rest, a spring force of the seal ring 128 tends to decrease the seal ring's diameter to a relative minimum value by default. During use, centrifugal forces acting upon the seal ring 128 due to rotation will tend to expand the seal ring 128 and increase the diameter so that it maintains continuous tight contact with the first component 22. The split configuration of the seal ring 128 also facilitates installation.

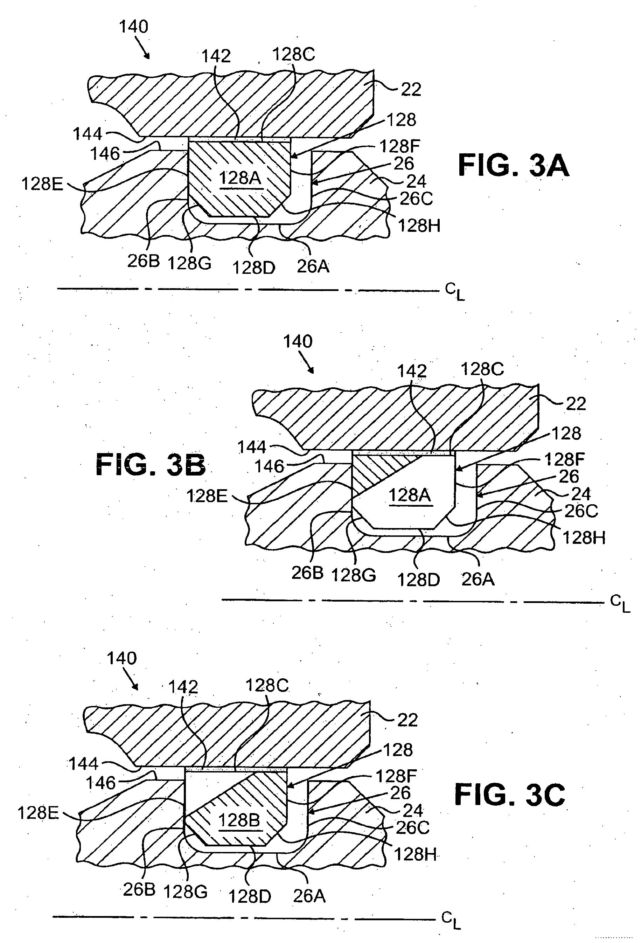

FIGS. 3A-3C are cross-sectional views of a seal assembly 140, which includes the seal ring 128. The illustrated views of FIGS. 3A-3C are oriented with respect to the seal ring 128 along lines A-A, B-B and C-C of FIG. 2, respectively.

The seal assembly 140 includes a first component 22 (e.g., a rotor), a second component 24 (e.g., a shaft), a groove 26 formed in the second component 24, the seal ring 128, and a coating 142. The seal assembly 140 is arranged relative to an axis of rotation C_{L} (the distance from the axis C_{L} to the illustrated components is not shown to scale in FIGS. 3A-3C), and the first and second components 22 and 24 and the seal ring 128 are rotatable about the axis C_{L}.

The first component 22 defines an inner surface 144, and the second component 24 defines an outer surface 146. The first component 22 is arranged radially outward from the second component 24, such that the inner surface 144 of the first component 22 and the outer surface 146 of the second component 24 face each other. The first and second components 22 can each be made of metallic materials, such as nickel-based materials.

The groove 26 can be generally U-shaped, and defines a bottom surface 26A and opposed first and second lateral surfaces 26B and 26C. The first and second lateral surfaces 26B and 26C each adjoin the outer surface 146, and the bottom surface 26A adjoins both the first and second lateral surfaces 26B and 26C. Fillets can be provided between the bottom surface 26A and the first and second lateral surfaces 26B and 26C. The first and second lateral surfaces 26B and 26C can each be arranged perpendicular to the outer surface 146 of the second component 24.

The seal ring 128 restricts fluid flow to help isolate the fluids at opposite sides of the seal assembly 140. The seal ring 128 extends at least partially into the groove 26, to engage and retain the seal ring 128. In the illustrated embodiment, the seal ring 128 has a hexagonal cross-sectional perimeter defined by an outer diameter surface 128C, and inner diameter surface 128D, a first lateral surface 128E, a second lateral surface 128F, and first and second chamfers 128G and 128H. The first and second lateral surfaces 128E and 128F are located opposite one another, and can be parallel to each other. The outer diameter surface 128C adjoins both the first and second lateral surfaces 128E and 128F at corresponding edges, and the outer diameter surface 128C can be arranged perpendicular to both the first and second lateral surfaces 128E and 128F. The first and second chamfers 128G and 128H each adjoin the inner diameter surface 128D at corresponding edges, such that the first chamfer 128G is located between the inner diameter surface 128D and the first lateral surface 128E and the second chamfer 128H is located between the inner diameter surface 128D and the second lateral surface 128F. Moreover, the first and second lateral surfaces 128E and 128F of the seal ring 128 can be arranged parallel to the respective first and second lateral surfaces 26B and 26C of the groove 26. The free ends 128A and 128B allow the diameter of the seal ring 128 to be increased during installation to fit the ring 128 over the second component 24 and into the groove 26. When at rest after installation, that is, when not rotating (this condition is not shown in the figures), the seal ring 128 assumes a relative minimum diameter such that the inner surface 128D of the seal ring 128 contacts the bottom surface of the groove 26 in the second component 24. During operation, the diameter of the seal ring 128 can change due to interactions of applicable forces, including a centrifugal force generated by rotation of the seal ring 128. When the seal ring rotates at operational speeds (as shown in FIGS. 3A-3C), the seal ring 128 tends to expand to a relative maximum diameter such that the outer diameter surface 128C abuts the inner surface 144 of the first component (with the coating 142 therebetween). The seal ring 128 is configured such that the first and second free ends 128A and 128B generally maintain an overlapping relationship, including when the diameter of the seal ring 128 is at its relative maximum dimension.

The split surface 130, defined at the interface between mating cut-out notch surfaces 130A and 130B of the respective first and second free ends 128A and 128B of the seal ring 128, extends from the first lateral surface 128E of the seal ring 128 (i.e., radially outward of the first chamfer 128G) to the outer diameter surface 128C of the seal ring 128. In the illustrated embodiment, the split surface 130 is oriented at approximately 55° relative to the first lateral surface 128E, though any desired angular orientation is possible in further embodiments.

The coating 142 can be located between the outer diameter surface 128C of the seal ring 128 and the inner surface 144 of the first component 22. In one embodiment, the coating has a thickness (measured in the radial direction) of approximately 25.4-76.2 µm (1-3 mils). Generally, the coating 142 is a relatively soft material compared to the material of the first component 22 and the seal ring 128. For example, in one embodiment the coating 142 is made of approximately 90 wt% copper (Cu) and approximately 10 wt% aluminum (Al), plus incidental impurities. The coating 142 can be applied to the seal ring 128 using known plasma spray techniques. As the seal ring 128 is dragged axially by its adherence to the first component 22 due to high centrifugal forces and displacement of the seal ring 128 is limited by an axial width of the groove 26 (i.e., the width between the lateral surfaces 26B and 26C) fretting can developed between the two parts. The coating 142 helps limit negative effects of fretting between the seal ring 128 and the first component 22.

A fluid (e.g., air) at a relatively high pressure and temperature can be present between the first and second components 22 and 24 at an aft side (to the right in FIGS. 3A-3C) of the seal ring 128, and a fluid (e.g., air) at a relatively low pressure and temperature can be present between the first and second components 22 and 24 at a forward side (to the left in FIGS. 3A-3C) of the seal ring 128. In further embodiments, other pressure and temperature relationships are possible. Moreover, the particular type of fluid or fluids present can vary as desired for particular applications.

In one embodiment, the seal assembly 140 is located in a compressor stage of a gas turbine engine (additional portions of the gas turbine engine are not shown), though it will be appreciated by those of ordinary skill in the art that other applications of the present invention are possible. Because the configuration and operation of gas turbine engines is well-known, further discussion here is unnecessary. However, it should be noted that during operation, the first component 22 (e.g., rotor) tends to axially move back and forth relative to the second component 24 (e.g., shaft), due to varying engine conditions such as the engine throttling up and down and changing compressor rotation speed and temperature profile. The seal ring 128 tends to axially move with (i.e., be dragged with) the first component 22 due to friction, which in turn moves the seal ring 128 within the groove 26 and relative to the second component 24. Axial movement of the seal ring 128 is constrained by the groove 26, particularly the axial width of the groove 26. Contact between the first lateral surfaces 26B and 128E or between the second lateral surfaces 26C and 128F can arrest and limit axial movement of the seal ring 128, at which point further axial movement of the first component 22 will cause frictional sliding between the seal ring 128 and the first component 22.

Positioning of the seal ring 128 during operation (i.e., while rotating) can generally assume three different positions: (a) contacting the first lateral surface 26B of the groove 26, (b) spaced from both the first and second lateral surfaces 26B and 26C of the groove 26, and (c) contacting the second lateral surface 26C of the groove 26. In situations (a) and (c), the seal ring 128 of the illustrated embodiment substantially seals all leak paths between the first and second components 22 and 24. Particularly, the location of the split surface 130 under situation (a) maintains a face seal between the seal ring 128 and the first lateral surface 26B of the groove 26 along an entire circumference of the seal ring 128, including both the first and second free ends 128A and 128B of the seal ring 128. In other words, the split surface 130 is arranged such that a gap between the first and second components 22 and 24 is covered (i.e., sealed by the seal ring 128) whenever the seal ring 128-including the coating 142 and any other coatings-abuts both of the first and second components 22 and 24. This is shown in FIG. 3C, for example, where the first lateral surface 128E of the second free end 128B contacts the second component 24 to create a face seal with the first lateral surface 26A of the groove 26. Under situation (b), a leak path exists around the seal ring 128, which creates a labyrinth type seal to limit the amount of fluid leakage between the first and second components 22 and 24. The axial width of the groove 26 can be configured such that any gaps between the seal ring 128 and surfaces of the groove 26 creating a leak path are acceptable under any circumstances, including situation (b).

The present inventors have discovered that the seal ring 128 of the present invention is more effective under a full range of typical operating conditions than the prior art seal ring 28 shown in FIG. 1. Although it was previously believed that increasing face seal area between the seal ring 28 and a lateral surface of the groove 26 was most desirable, it has been discovered that the overall sealing effectiveness of the seal 128 is superior to that of the seal 28 because of the closing of the leak path 32 under situation (a) described above.

Those of ordinary skill in the art will appreciate that that present invention provides numerous advantages and benefits. For example, as discussed above, overall (net) sealing efficiency is relatively high compared to prior art designs. When the first lateral surface 128E of the seal ring 128 is in contact with the first lateral surface 26B of the groove 26 and the outer diameter surface 128C of the seal ring abuts the inner surface 144 of the first component 22, circumferentially continuous face seals are formed without any open leak path gap between the first and second components 22 and 24. Moreover, the locations of the split surface 130 helps to reduce sensitivity of the seal ring 128 forward/aft orientation (i.e., the forward and aft orientation of the first and second lateral surfaces 128E and 128F), which provides assembly mistake proofing benefits.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A method of creating a seal between a first component (22) and a second component (24) with a split seal ring (128) in a groove (56) in the second component (24), the method comprising:
overlapping first and second free ends (128A,128B) of the split seal ring at a split surface (130);
rotating the first and second components (22,24) and the split seal ring (128);
increasing a diameter of the split seal ring (128) during rotation; **characterized in that**
when the split ring seal (128) contacts the second component (24) during rotation to form a face seal, positioning both the first and second free ends (128A, 128B) of the split ring seal (128) in contact with the second component (24) immediately adjacent to the split surface (130), such that both the first and second free ends (128A, 128B) form respective face seals.

2. The method of claim 10 and further comprising:
applying a coating (142) of relatively soft material between the split seal ring (128) and the first component (22).

## Patentansprüche

1. Verfahren zum Bilden einer Dichtung zwischen einer ersten Komponente (22) und einer zweiten Komponente (24) mit einem geteilten Dichtring (128) in einer Nut (56) in der zweiten Komponenten (24), das Verfahren umfassend:
Überlappen eines ersten und zweiten freien Endes (128A, 128B) des geteilten Dichtrings an einer geteilten Fläche (130);
Drehen der ersten und zweiten Komponente (22, 24) und des geteilten Dichtrings (128);
Vergrößern eines Durchmessers des geteilten Dichtrings (128) während des Drehens; **dadurch gekennzeichnet, dass**
wenn der geteilte Dichtring (128) die zweite Komponente (24) während des Drehens berührt, um eine Flächendichtung zu bilden, derartiges Positionieren von sowohl dem ersten als auch dem zweiten freien Ende (128A, 128B) des geteilten Dichtrings (128) in Kontakt mit der unmittelbar zu der geteilten Fläche (130) benachbarten zweiten Komponente (24), dass sowohl das erste als auch das zweite freie Ende (128A, 128B) entsprechende Flächendichtungen bilden.

2. Verfahren nach Anspruch 1 und ferner umfassend:
Aufbringen einer Beschichtung (142) aus einem relativ weichen Material zwischen dem geteilten Dichtring (128) und der ersten Komponente (22).

## Revendications

1. Procédé de création d'un joint d'étanchéité entre un premier composant (22) et un deuxième composant (24) avec une bague d'étanchéité fendue (128) dans une rainure (56) du deuxième composant (24), le procédé comprenant :
le chevauchement des première et deuxième extrémités libres (128A, 128B) de la bague d'étanchéité fendue sur une surface fendue (130) ;
la rotation des premier et deuxième composants (22, 24) et de la bague d'étanchéité fendue (128) ;
l'augmentation d'un diamètre de la bague d'étanchéité fendue (128) pendant la rotation ; **caractérisé en ce que**
lorsque la bague d'étanchéité fendue (128) vient en contact avec le deuxième composant (24) pendant la rotation pour former un joint d'étanchéité frontal, en positionnant les première et deuxième extrémités libres (128A, 128B) de la bague d'étanchéité fendue (128) en contact avec le deuxième composant (24) immédiatement adjacent à la surface fendue (130), de sorte que les première et deuxième extrémités libres (128A, 128B) forment des joints d'étanchéité frontaux respectifs.

2. Procédé selon la revendication 1 et comprenant en outre :
l'application d'un revêtement (142) en matériau relativement mou entre la bague d'étanchéité fendue (128) et le premier composant (22).
